(19) **Europäisches Patentamt / European Patent Office / Office européen des brevets**

(11) **EP 1 110 065 B1**

(12) **EUROPEAN PATENT SPECIFICATION**

(45) Date of publication and mention
of the grant of the patent:
**12.03.2008 Bulletin 2008/11**

(51) Int Cl.:
**G01H 9/00** *(2006.01)*　　**E21B 47/12** *(2006.01)*

(21) Application number: **99945442.4**

(22) Date of filing: **02.09.1999**

(86) International application number:
**PCT/US1999/020166**

(87) International publication number:
**WO 2000/012978 (09.03.2000 Gazette 2000/10)**

(54) **SEISMIC SENSING AND ACOUSTIC LOGGING SYSTEMS USING OPTICAL FIBER, TRANSDUCERS AND SENSORS**

SEISMISCHES MESS-SYSTEM UND AKUSTISCHES BOHRLOCHSYSTEM MIT OPTISCHER FASER, WANDLERN UND SENSOREN

SYSTEMES DE DIAGRAPHIE ACOUSTIQUE ET DE DETECTION SISMIQUE UTILISANT UNE FIBRE OPTIQUE, TRANSDUCTEURS ET CAPTEURS

(84) Designated Contracting States:
**FR GB**

(30) Priority: **02.09.1998　US 145621**
　　　　　　　**02.09.1998　US 145624**
　　　　　　　**02.09.1998　US 146017**

(43) Date of publication of application:
**27.06.2001　Bulletin 2001/26**

(73) Proprietor: **WEATHERFORD/LAMB, INC.**
**Houston**
**Texas 77027 (US)**

(72) Inventors:
• **WU, Jian-qun**
**Houston, TX 77064 (US)**
• **KERSEY, Alan, D.**
**S. Glastonbury, CT 06073 (US)**

• **MARON, Robert, J.**
**Cromwell, CT 06416 (US)**
• **PRUETT, Phillip, E.**
**Richmond, Texas 77469 (US)**
• **HAY, Arthur, D.**
**Cheshire, CT 06410 (US)**
• **DIDDEN, Kevin, F.**
**Wallingford, CT 06492 (US)**

(74) Representative: **Brewer, Michael Robert**
**Marks & Clerk,**
**4220 Nash Court,**
**Oxford Business Park South**
**Oxford OX4 2RU (GB)**

(56) References cited:
| | |
|---|---|
| **EP-A- 0 434 030** | **WO-A-99/38048** |
| **US-A- 4 390 974** | **US-A- 4 829 486** |
| **US-A- 5 497 233** | **US-A- 5 675 674** |

**Description**

This application is related to US 6,305,227; US 6,252,656; and US 6,137,621, all filed September 2, 1998. US 6,252,656 is related to US 5,986,749, filed September 19, 1997.

BACKGROUND OF INVENTION

1. Technical Field

The present invention relates to a distributed sensing system; and more particularly, to a distributed sensing system using either a geophone or a quartz sensor and optical fiber for sensing a physical property such as pressure in an borehole of an oil well.

The present invention also relates to a logging system for sensing and determining properties of earth formations; and more particularly to a logging system using fiber optics for sensing and transmitting data containing information about a borehole of an oil well with a sonde.

2. Description of the Prior Art

Quartz Sensing Systems

A traditional pressure sensor using quartz crystals generates a RF signal whose frequency is proportional to the pressure applied on the pressure sensor. The frequency of the RF signal is measured and converted into a pressure measurement.

To compensate for the temperature effect on the measurement, the pressure sensor is typically made of two quartz structures that have resonance frequencies depending on the temperature and pressure. One of the quartz structures is insulated and is under a constant pressure. The other quartz structure is subject to the pressure at the sensor location. The two resonance signals are mixed. The RF signal whose frequency is a difference between the two resonating frequencies is the output. The difference in resonance frequencies is due to the pressure.

Such a pressure measurement is very accurate and is free of temperature effect. Because the quartz property is very stable over time, the sensor measurement does not drift with time. The quartz pressure sensor is very accurate and reliable for both dynamic and static pressure measurements.

Although the quartz pressure sensor is excellent in applications where a single point or a few point sensing is required, it is, however, very hard to build a distributed pressure sensing system using these pressure sensors. A RF telemetry system requires the capability of generating at a sensor location a carrier RF signal whose frequency does not change with pressure, temperature, and time. The cross talk is eliminated by using a carrier whose frequency is distinct. A digital approach would require attaching electronics to each sensor to digitize the frequency information and feed it into a digital telemetry bus.

Various distributed fiber optic pressure sensing systems have been used to measure acoustic or seismic signals. In particular, systems using fiber Bragg gratings (FBG) have been proposed to perform distributed acoustic sensing. The advantage of the FBG systems is that the sensors are part of the fiber that is also the telemetry system. Such sensing systems are simple, reliable, scalable, and inexpensive. Although good for sensing dynamic signals, simple FBG based systems do not produce reliable measurement of absolute static pressure free of temperature effect over time.

The present invention provides a solution to overcome these disadvantages in the prior art sensing systems.

Other Seismic Sensing Systems

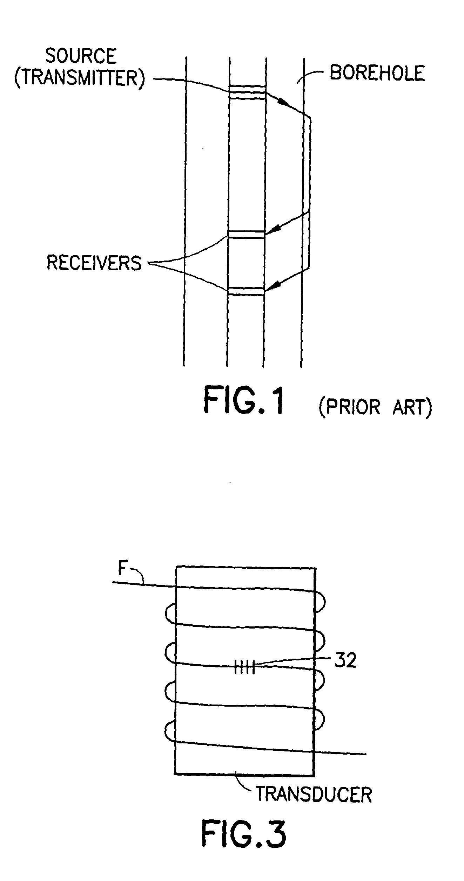

Other seismic sensing systems are known in the art. For example, United States Patent No. 5,623,455, issued to Norris, shows and describes an apparatus and method for acquiring seismic data shown in Figure 1 having a recorder 40, data acquisition units DAU, remote units RU, remote unit taps 51; and receivers 22 in the form of geophones. As shown in Figure 1, each remote unit RU is connected to six receivers 22. One disadvantage of Norris's seismic data acquiring system is that the recording units RU and data acquisition units DAU use batteries which are expensive and time consuming to replace, and the recording units RU and data acquisition units DAU are also heavy devices that are not easily handled during deployment.

Moreover, the use of a fiber having fiber Bragg Gratings in combination with a piezoelectric transducer is shown and described in United States Patent No. 5,675,674, issued to Weis, entitled "Optical Fiber Modulation and Demodulation System,". See also US 5,986,749, filed September 19, 1997, which shows and describes a fiber optic sensing system for an oil logging production system having a sensor element with an optical fiber and fiber Bragg Gratings, a piezoelectric transducer, a photo detector, and electroplates.

Logging Systems

Figure 1 shows a sonic sonde that is known in the art, and used in a logging system for sensing and determining the rock formations in the borehole of the well or the like. The sonde has a transmitter (i.e. source) for providing a transmitter acoustic signal, and has receivers for responding to the transmitter acoustic signal, for providing electrical receiver signals containing information about rock formations in the borehole.

In operation, the transmitter emits a sound pulse, and its arrival at the receivers is recorded by recording apparatus that is not shown in Figure 1 but is well known in the art. This process is repeated at a fixed rate as the tool traverses through the borehole. Because the p-wave velocity is faster in the formation than in the borehole fluid, the first arrivals are the waves refracted in the formation at the side of the borehole wall. The receiver spacing and the p-wave velocity in the formation determine the delay between the arrival times. The delays or quantities derived from the delays are plotted as a function of borehole depth. See also United States Patent No. 4,162,400, which describes a fiber optic well logging tool for passing through a borehole of an oil well. See also Well Logging For Earth Scientists, Chapters 15-17, Darwin V. Ellis, Elsevier, 1987, as well as Acoustic Waves in Boreholes, Frederick L. Paillet and Chuen Hon Cheng, CRC Press, 1991.

The acoustic receivers are made of pressure transducers. Piezoelectric or magnetostrictive materials are used to sense the pressure signal. The voltage output of the piezoelectric or the current output of the magnetostrictive varies with the pressure. Sensitive electronics built into the sonde measures the voltage or the current. The measurements are processed and sent uphole via an electrical wireline.

Figure 1 shows an idealized situation where the sonde is in the middle of a borehole that is ideally very smooth. All current tools use an extra transmitter located on the opposite side of the receivers. Sound pulses are emitted alternately from the transmitters. The measured delays from the two oppositely traveling refracted waves are averaged. The averaged delays are less sensitive to the more irregular contour of a real borehole as well as tool tilting.

The sonde described above record only the time delay between the arrival pulses. The receiver readings as a function of time after the transmitter pulse (sonic traces) are not used, and therefore, not recorded. The only data sent through the wireline are the delays. Even at fast logging speeds, the data volume is moderate and can be transmitted through the standard 7-wire wireline whose capacity is 1 Mbit/s.

Due to the advance in processing, interpretation, and modeling, more properties of the formation, borehole, and tool performance can be obtained by using the entire receiver traces in both receivers. A 10-millisecond trace at 5 microsecond intervals consists of two thousand data points. In addition, more than two receivers are used for array processing. The data collected at each logging depth consist of thousands of measurements (numbers) as opposed to the time delay measurement (a single number). The huge data volume generated from the newer acoustic logging tools severely limits the logging speed.

Fiber optic telemetry systems have been proposed to replace the standard 7-wire cable. United States Patent No. 5,495,547, describes a combination fiber-optic/electrical conductor well logging cable. The combination logging cable preserves all the functionality and structural integrity of the standard 7-wire plus one or more fiber wires integrated in. Fibers provide much higher bandwidth, allowing a much faster data transmission rate. Opto- electronics are used to convert electrical signals to optical signals fed into the fiber. The receiver electronics are the same as the traditional wireline acoustic tool. The use of fiber solves the problem of data transmission capacity. The much higher data rate is achieved by using opto-electronics downhole. This increases the cost of the tool and its rate of failure.

One disadvantage of the known designs is that the sensitive electronic are disposed in the sonde and subject to very harsh conditions, including high temperatures and undesirable vibrations when passing through the borehole. These adverse conditions can limit accuracies in data measurement, as well as accelerated electronic failure.

Other known systems are disclosed in: US 4,390,974; US 4,829,486; EP 0434030; and US 5,497,233.

SUMMARY OF THE INVENTION

The Quartz Sensing System

The present invention provides a new and unique quartz sensing system that includes a quartz sensor, an electromechanical converter, an optical source, an optical fiber and a measurement unit.

The quartz sensor responds to a physical property such as pressure in a borehole of an oil well, and further responds to an electrical power signal, for providing a quartz sensor electrical signal containing information about the physical property such as the pressure.

The electromechanical converter responds to the quartz sensor signal, for providing a mechanical force containing information about the sensed voltage or current signal.

The electromechanical converter may include a piezoelectric or magnetostrictive transducer that responds to the quartz sensor signal, for providing an piezoelectric or magnetostrictive transducer force in the form of an expansion or contraction force containing information about the quartz sensor signal. The piezoelectric or magnetostrictive transducer converts electrical energy into mechanical energy, and vice versa.

The electromechanical converter may also include two acoustic transmitters, one being connected to the quartz sensor and acting as an acoustic transmitter, and the other being an acoustic receiver. The acoustic transmitter responds to the quartz sensor signal, for providing an acoustic transmitter wave containing information about the quartz sensor signal. The acoustic receiver responds to the acoustic transmitter wave, for providing a receiver force containing information about the acoustic transmitter wave. In effect, the receiver converts acoustic energy into mechanical energy in the form of expansion and contraction.

The optical source provides an optical signal through the optical fiber. The optical signal may be a broadband or narrowband signal depending on whether a wavelength or time division multiplexing signal processing scheme is used.

The optical fiber responds to the electromechanical converter force, for changing an optical parameter or characteristic of the optical source signal depending on the change in length of the optical fiber and providing an electromechanically-converted optical signal containing information about the electromechanical converter force. In effect, the optical fiber converts electromechanical energy from the piezoelectric or magnetostrictive transducer into optical energy by changing a fundamental characteristic or parameter such as the phase or wavelength of the optical signal being transmitted or reflected through the optical fiber. The optical fiber is wrapped around the transducer and affixed thereon, including by bonding or wrapping under tension the optical fiber on the transducer. The optical fiber expands and contracts along with the transducer, which causes the change in the length of the optical fiber, which in turn causes the change in the phase or wavelength of the optical signal. The optical fiber may also have one or more fiber Bragg Gratings therein which change the phase of the optical signal depending on the change in length of the fiber Bragg Grating. Fiber Bragg Grating pairs may also be arranged on a part of the optical fiber not bonded to the transducer when a cavity approach is used with the transducer arranged between the fiber Bragg Grating pairs. In summary, the electrical voltage signal from the quartz sensor causes the transducer to stretch or contract the optical fiber and change in the length of the fiber, which in turn causes a change of the phase or wavelength in the optical signal being transmitted or reflected through the optical fiber.

The measurement unit responds to the electromechanical converter optical signal, for providing a measurement unit signal containing information about the physical property such as the pressure. The measurement unit converts the electromechanically-converted optical signal into the information about the physical property by detecting and processing the change in the optical parameter or characteristic such as the phase or wavelength of the optical signal.

The present invention provides important advantages over the sensing system of the prior art. The quartz sensor is a very stable sensing device. Moreover, since voltage measurements are effectively made at the sensing locations, the sensing system of the present invention does not suffer from the problem of signal attenuation. In operation, the electrical voltage signal is electro-optically converted into an optical phase or wavelength signal that is not adversely affected by amplitude attenuation as long as the amplitude of the light reaching the measurement unit is above some minimum value. Therefore, the voltage signal is effectively digitized at the sensor location without practically any quantization error. The optical detector system of the measurement unit and the property of the piezoelectric or magnetostrictive transducer determine the accuracy of the voltage measurement. Another advantage of the present invention is that there is no need for using sensitive electronics subject in hazardous conditions such as high temperature or pressure in a borehole of an oil well.

The present invention, therefore, can be used in many sensing applications.

The Geophone Sensing System

The present invention also provides a seismic sensing system having a sensor, a transducer, an optical source and detection unit, an optical fiber and a measurement unit.

The sensor responds to a seismic disturbance, for providing a sensor signal containing information about the seismic disturbance. The sensor may be a geophone that detects vibrations passing though rocks, soil, etc., and provides an electrical sensor signal.

The transducer responds to the sensor signal, for providing a transducer force in the form of an expansion or contraction force that contains electromechanical information about the sensor signal. The transducer may be a piezoelectric, magnetostrictive or electrostrictive transducer that converts electrical energy into mechanical energy, and vice versa.

The optical source and detection unit provides an optical signal through the optical fiber. The optical signal may be a broadband or narrowband signal depending on whether a wavelength or time division multiplexing signal processing scheme is used.

The optical fiber responds to the transducer force, changes the phase or wavelength of the optical signal depending on the change in length of the optical fiber, for providing a transduced optical signal containing information about the transducer force. In effect, the optical fiber converts electromechanical energy from the transducer into optical energy by changing a fundamental characteristic and parameter such as the phase of the optical signal being transmitted or reflected through the optical fiber. The optical fiber is wrapped around the transducer and affixed thereon, for example by bonding. The optical fiber expands and contracts along with the transducer, which causes the change in the length of the optical fiber, which in turn causes the change in the phase of the optical signal. The optical fiber may also have one or more fiber Bragg Gratings therein which change the wavelength of the optical signal depending on the change in length of the fiber Bragg Grating. A fiber Bragg Grating pairs may also be arranged on a part of the optical fiber not bonded to the transducer when a cavity approach is used with the transducer arranged between the fiber Bragg Grating pair. In summary, the electrical voltage signal from the geophone causes the transducer to stretch or contract the optical fiber and change in the length of the fiber, which in turn causes a change of the phase or wavelength of the optical signal being transmitted or reflected through the optical fiber.

The measurement unit responds to the transduced optical signal, for providing a measurement unit signal containing information about the seismic disturbance. The measurement unit converts the transduced optical signal into the information about the seismic disturbance by detecting and processing the change in the phase or wavelength of the optical signal.

The seismic sensing system will typically have an array of geophones. Each geophone is connected to a respective piezoelectric, magnetostrictive or electrostrictive transducer, or the like. Each fiber Bragg Grating pair may have a respective wavelength $\lambda_1$, $\lambda_2$, ..., $\lambda_n$, for providing a multiplexed fiber Bragg Grating optical signal containing information about changes in the optical fiber caused by the electromechanical force from the respective piezoelectric, magnetostrictive or electrostrictive transducer.

The present invention provides important advantages over the seismic sensing system of the aforementioned prior art patent to Norris. First, the transducer and optical fiber combination is a passive electrical element that is economical because it requires no batteries or time consuming and expensive battery replacement, and is also lightweight and easily handled during deployment of the seismic sensing system. Because of this, the seismic sensing system provides a much less cumbersome way for sensing and multiplexing seismic disturbances with a high channel count using optical fiber. Second, since voltage measurements are effectively made at the sensing locations, the seismic sensing system of the present invention does not suffer from the problem of signal attenuation. In operation, the electrical voltage signal is electro-optically converted into an optical phase or wavelength signal that is not adversely affected by amplitude attenuation as long as the amplitude of the light reaching the measurement unit is above some minimum value. Therefore, the voltage signal is effectively digitized at the sensor location without practically any quantization error. The optical detector system of the measurement unit and the property of the piezoelectric, magnetostrictive or electrostrictive transducer determine the accuracy of the voltage measurement.

The present invention, therefore, can be used in applications other than seismic sensing.

The Acoustic Logging System

The present invention further still provides an acoustic logging system having a sonde for arranging in a borehole of a well such as an oil well. The sonde has at least one transmitter for providing at least one transmitter acoustic signal, and has receivers for responding to the at least one transmitter acoustic signal, for providing electrical receiver signals containing information about properties of earth formations in the borehole of the well.

The acoustic logging system features one or more transducers, a light source, an optical fiber and a detection and management unit.

The one or more transducers respond to the electrical receiver signals from the receiver of the sonde, for providing one or more mechanical transducer forces containing information about the electrical receiver signals. At least one transducer may be a piezoelectric or magnetostrictive transducer.

The light source provides an optical signal through the optical fiber.

The optical fiber responds to the one or more mechanical transducer forces, for changing an optical parameter or characteristic of the optical signal depending on the change in length of the optical fiber, and providing a transduced optical signal containing information about the one or more mechanical transducer forces from the one or more transducers. The optical fiber is wrapped around the one or more transducers and affixed thereon. The optical fiber may be affixed to the one or more transducers by bonding or wrapping under tension. In one embodiment, the optical fiber may have fiber Bragg Grating pairs arranged on a part thereof not bonded to the one or more transducers; and each transducer is arranged between a respective fiber Bragg Grating pair. In another embodiment, the optical fiber has a fiber Bragg Grating arranged on a part thereof bonded to the transducer. The acoustic logging system may also include a coupler-based interferometric system for sensing and determining the change in the optical parameter or characteristic of the optical signal depending on the change in length of the optical fiber. In each case, the change in length of the optical fiber causes a change in the phase or wavelength of the optical signal being transmitted or reflected through the optical fiber.

The detection and management unit has a signal processor, responds to the transduced optical signal, and provides a detection and management unit signal containing information about the properties of the earth formations in the borehole. The detection and management unit may use either a wavelength division multiplexing scheme for signal processing, a time division multiplexing scheme for signal processing or a combined wavelength and time division multiplexing scheme for signal processing.

The at least one transmitter of the sonde may be a fiber optic acoustic source having a photocell and an acoustic transducer. In this embodiment, the photocell responds a fiber optic acoustic source signal from the detection and management unit, for providing electrical photocell signals; and the acoustic transducer responds to the electrical photocell signals, for providing the transmitter acoustic signal.

The at least one transmitter may also include multiple fiber optic acoustic sources with the optical fiber having fiber Bragg Gratings therein each with a separate wavelength. Each multiple fiber optic acoustic source includes a fiber optic acoustic source having a circulation coupler optical coupler, a fiber Bragg Grating, a photocell and an acoustic transducer.

The present invention also features an acoustic logging system having a sonde for arranging in a borehole of a well, the sonde having at least one transmitter for providing at least one transmitter acoustic signal, and having receivers for responding to the at least one transmitter acoustic signal, for providing electrical receiver signals containing information about properties of earth formations in the borehole of the well. In this embodiment, the at least one transmitter comprises one or more fiber optic acoustic sources having an optical fiber with fiber Bragg Gratings. Similar to that discussed above, each fiber optic acoustic source includes a fiber optic acoustic source having a circulation coupler, a fiber Bragg Grating, a photocell and a acoustic transducer.

One important feature of the present invention is that it uses optical fiber to measure the receiver output as well as to transmit data. In operation, the electrical receiver voltage signal is transformed into an optical phase or wavelength signal and transmitted or reflected back to the detection and management unit for signal processing. The present invention eliminates the need for using extra electronics down in the borehole, greatly reduces the electronics content downhole and simplifies the overall design of the sonde tool. Because of the use of piezoelectric or magnetostrictive transducer material, the sonde tool of the present invention eliminates completely the use of downhole receiver electronics. The reduction or elimination of downhole electronics not only reduces the cost of the tool, but also improves the reliability. Moreover, the tool of the current invention can be operated under high temperature. All the measurement electronics are on the surface, which is a much friendlier environment.

In summary, the advantages of the present invention include at least the following: (1) higher data rate telemetry, (2) no downhole receiver electronics, (3) a less expensive overall sonde design, (4) a more reliable design, (5) reduced overall well logging costs, (6) enables the uses of wavelength division multiplexing (WDM) and time division multiplexing (TDM), which allows more receivers to be built into the sonde tool for more accurate acoustic measurement, and (7) multi-pole transmitters and receivers can easily be made.

The invention will be fully understood when reference is made to the following detailed description taken in conjunction with an accompanying drawing.

BRIEF DESCRIPTION OF THE DRAWING

The drawing includes the following:

Figure 1 is a schematic sketch of a sonic sonde that is known in the art.
Figure 2 is a diagram of a sensing system that is the subject matter of the present invention.
Figure 3 is a diagram of an alternative embodiment of a part of the sensing system shown in Figure 2.
Figure 4 is a diagram of an alternative sensing system using a coupler-based interferometer technique.
Figure 5 is a diagram of another embodiment of the present invention.
Figure 6 is a diagram of a cable housing for the sensing system.
Figure 7 is a diagram of another embodiment having a serial transducer arrangement.
Figure 8 is a diagram of parallel geophone arrangement.
Figure 9 is a diagram of a serial geophone arrangement.
Figure 10 is a schematic sketch of a receiver according to the present invention.
Figure 11 is a schematic sketch of a fiber optic acoustic source according to the present invention.
Figure 12 is a schematic sketch of a multiple acoustic source on a single fiber according to the present invention.
Figure 13 is a schematic of an embodiment of an acoustic logging system having a sonde with a new type of receiver.

DETAILED DESCRIPTION OF THE INVENTION

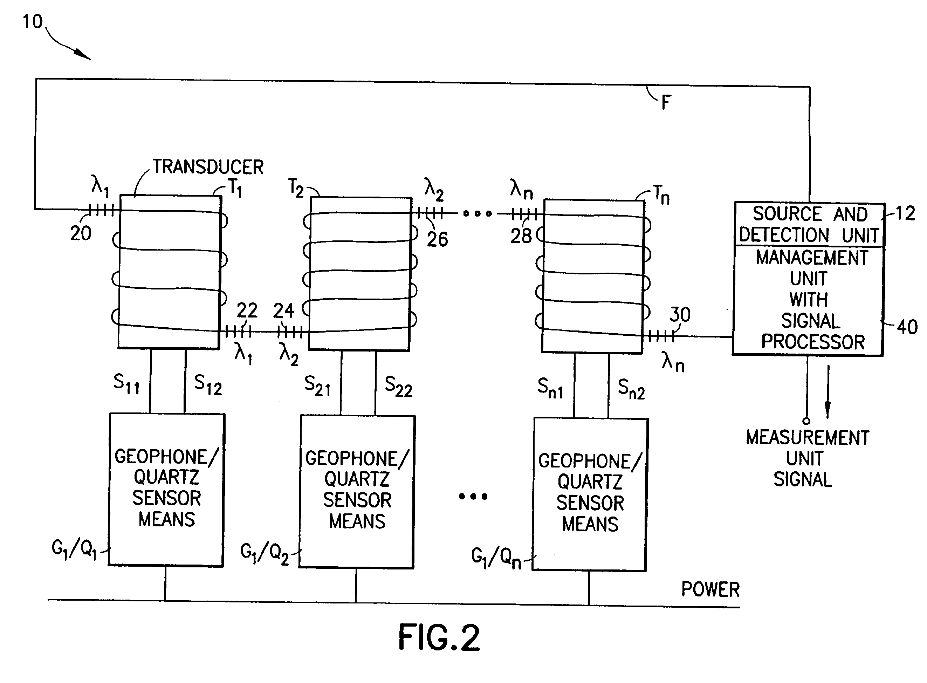

The Geophone and Quartz Sensing System in Figure 2

In general, the distributed pressure sensing system of the present invention uses geophone or quartz sensors in combination with optical fiber. The sensing system may be effectively used as a optical fiber-based telemetry system, where sensed data is transmitted to a remote signal processing location away from the sensed area which may be subjected to extreme conditions such as very high temperature, pressure, or both in the bore of an oil well.

Various means can be used to couple the output of the geophone or quartz sensor's output to the optical fiber-based telemetry system. Such a telemetry system has all the advantages of the geophone or quartz sensors and the FBG based systems.

The frequency, not the amplitude of the RF signal from the geophone or quartz sensor, is the measurement. The RF signal therefore can be amplified if necessary. It is used to produce an acoustic signal that is either coupled directly into or picked up by a FBG sensor. Since only the frequency is desired, the measurement can be made very accurately using the FBG sensor.

The various couplings between the geophone or quartz sensor and the optical fiber shown and described below are an important feature of the present invention. In Figure 2, the geophone or quartz sensor is shown directly coupled to the transducer and an RF signal (after being amplified if necessary) is used to drive the transducer on which part of the fiber is wound. The cavity FBG sensor is shown in Figure 2. The fiber Bragg Gratings can also be placed directly on the fiber section on the transducer and the wavelength shift is measured as shown in Figure 3.

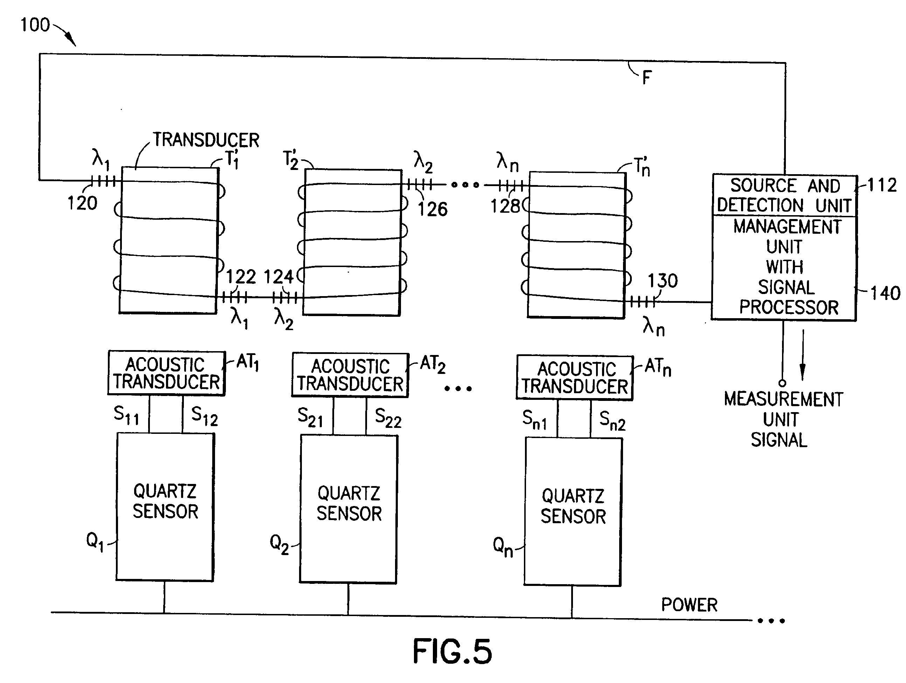

In Figure 5, the quartz sensor is shown indirectly coupled to the transducer and optical fiber by an acoustic transducer. The acoustic signal is picked up by the transducer, which changes the length of the optical fiber wrapped thereon. Again, various types of FBG sensors can be used.

In particular, Figure 2 shows a sensing system generally indicated as 10 having geophone or quartz sensors $G_1/Q_1$, $G_2/Q_2$, ... , $G_n/Q_n$, transducers $T_1$, $T_2$, ..., $T_n$, a broadband optical source 12, an optical fiber F having pairs of fiber Bragg Grating therein 20, 22; 24, 26; 28, 30 and a measurement unit 40.

In operation, the geophone sensors $G_1$, $G_2$, ..., $G_n$ respond to a physical property such as pressure, for providing geophone or quartz sensor electric signals $S_{11}$, $S_{12}$; $S_{21}$, $S_{22}$; ...; $S_{n1}$, $S_{n2}$ containing information about the physical property such as the pressure. In comparison, the quartz sensors $Q_1$, $Q_2$, ..., $Q_n$ respond to a physical property such as pressure, and further respond to an electrical power signal (the geophones do not need electric power), for providing geophone or quartz sensor electric signals $S_{11}$, $S_{12}$; $S_{21}$, $S_{22}$; ... ; $S_{n1}$, $S_{n2}$ containing information about the physical property such as the pressure. In operation, the geophone or quartz frequency is directly related to the pressure measurement. The scope of the invention is not intended to be limited to any particular kind of physical property sensed. The geophone or quartz sensors $G_1/Q_1$, $G_2/Q_2$, ..., $G_n/Q_n$ are known in the art, and the scope of the invention is not intended to be limited to any particular kind thereof. The scope of the invention is also not intended to be limited to only a geophone or quartz sensor. Other sensors may also be used that sense a pressure, and convert it into a sensor signal containing information about the pressure.

The transducers $T_1$, $T_2$, ..., $T_n$ respond to the geophone or quartz sensor electric signals $S_{11}$, $S_{12}$; $S_{21}$, $S_{22}$; ...; $S_{n1}$, $S_{n2}$, for providing electromechanical transducer forces in the form of transducer expansions and contractions containing information about the plurality of geophone or quartz sensor electrical signals. The transducers are known in the art, include both piezoelectric and magnetostrictive transducers, and are electrically passive elements. The scope of the invention is not intended to be limited to any particular kind of transducer. In operation, the transducers $T_1$, $T_2$, ..., $T_n$ respond to the geophone or quartz sensor electrical signals $S_{11}$, $S_{12}$; $S_{21}$, $S_{22}$; ...; $S_{n1}$, $S_{n2}$, and physically deform by expanding or contracting. Embodiments are envisioned using any transducer that responds to any electrical signal, and changes some physical parameter or characteristic like its mechanical shape that can be sensed by an optical fiber with a fiber Bragg Grating or fiber Bragg Grating pairs, or a coupler-based system.

The optical source and detection unit 12 provides an optical source signal, which may be a broadband or narrowband signal depending on the particular application, as discussed below. The optical source and detection unit 12 is known in the art; and the scope of the invention is not intended to be limited to any particular kind of optical source, or any particular broadband optical source signal.

The optical fiber F has fiber Bragg Grating pairs 20, 22; 24, 26; 28, 30 each with a respective wavelength $\lambda_1$, $\lambda_2$, ..., $\lambda_n$. The optical fiber F responds to the electromechanical force of the transducers $T_1$, $T_2$, ..., $T_n$, changes the phase of the optical signal depending on the change in length of the optical fiber, and provides pairs of fiber Bragg Grating optical signals containing multiplexed optical information about the electromechanical forces of the transducer $T_1$, $T_2$, ..., $T_n$. The optical fiber F is separately wrapped around each of the transducers $T_1$, $T_2$, ... , $T_n$ and affixed thereon. The optical fiber F may be affixed to the transducers $T_1$, $T_2$, ..., $T_n$ by bonding or by wrapping under tension. The bonding technique is known in the art, and the scope of the invention is not intended to be limited to any particular type thereof. The scope of the invention is not intended to be limited to any particular way of affixing the optical fiber to the transducers

$T_1$, $T_2$, ..., $T_n$. Each fiber Bragg Grating pair 20, 22; 24, 26; 28, 30 is arranged on a part of the optical fiber F not bonded to the transducers $T_1$, $T_2$, ..., $T_{n'}$ and the transducers $T_1$, $T_2$, ..., $T_{n'}$ are arranged between each fiber Bragg Grating pair 20, 22; 24, 26; 28, 30.

The measurement unit 40 responds to the fiber Bragg Grating optical signals, which is received by the detection unit 12, for providing a measurement unit signal containing information about the pressure. The measurement unit 40 is known in the art, and may include a typical microprocessor based architecture, including a microprocessor, a Random Access Memory (RAM), a Read Only Memory (ROM), input/output devices, and a bus for providing data and control signals between these elements. The scope of the invention is not intended to be limited to any particular hardware and software design of the measurement unit 40, and must perform the signal processing analysis, as discussed below.

The Alternative Embodiment Shown in Figure 3

Figure 3 shows a part of an alternative embodiment wherein a single fiber Bragg Grating 32 is separately arranged on a part of the optical fiber F bonded to each transducer T. The bonded fiber Bragg Grating 32 may be used instead of the unbonded fiber Bragg Grating pairs 20, 22; 24, 26; 28, 30.

The Fiber Bragg Gratings

The present invention uses fiber Bragg Gratings 20, 22, 24, 26, 28, 30, 32 as optical converters or sensors, and are well known in the art. The scope of the invention is not intended to be limited to any particular kind or type thereof. It should be understood that any suitable fiber Bragg Grating sensor configuration may be used. For example, the fiber Bragg Gratings can be used for interferometric detection. Alternatively, the fiber Bragg Gratings may be used to form lasing elements for detection, for example by positioning an Ebrium doped length of optical fiber between a pair of fiber Bragg Gratings. It will also be understood by those skilled in the art that the present invention will work equally as well with other types of sensors.

As will be further understood by those skilled in the art, the optical signal processing equipment may operate on a principle of wave-division multiplexing (WDM) as described above wherein each fiber Bragg Grating sensor is utilized at a different wavelength or frequency band of interest. In such WDM embodiments, the fiber Bragg Grating pairs all have different wavelengths, and a broadband light source and detection unit is typically used. Alternatively, the present invention may utilize time-division multiplexing (TDM) for obtaining signals of the same wavelength from multiple independent sensors using time of flight analysis, or any other suitable means for analyzing signals returned from a plurality of fiber Bragg Grating sensors formed in a fiber optic sensor string. In such TDM embodiments, the fiber Bragg Grating pairs have the same wavelengths, and a narrowband light source and detection unit is typically used. Embodiments are also envisioned using time-division multiplexing (TDM) in combination with wave division multiplexing (WDM), wherein some fiber Bragg Grating pairs have the same wavelengths, and some fiber Bragg Grating pairs have different wavelengths.

Moreover, the scope of the invention is also not intended to be limited to only a fiber Bragg Grating. Embodiments are envisioned using other fiber gratings that respond to optical signals, and change some optical parameter or characteristic thereof that can be subsequently sensed and/or detected.

Signal Processing Analysis

A person skilled in the art would appreciate how the optic fiber Bragg Grating sensors are used as sensor elements. The reader is generally referred to US 5,973,317; US 5,945,665; and US 5,925,879, all filed May 9, 1997, as well as US 6,175,108, filed January 30, 1998, all assigned to the assignee of the present application. The scope of the invention is not intended to be limited to any particular optical signal processing technique.

As described therein, a data acquisition unit has a broadband light source or laser diode with suitable photo optic couplers. Demodulators and filtering equipment can be used to monitor the Bragg Grating wavelength shift as the grating is subjected to strain. If more than one grating is used, wave division multiplexing techniques can be utilized to discriminate the value or change in wavelength of each individual Bragg Grating.

When such a fiber grating is illuminated, it reflects a narrow band of light at a specified wavelength. However, a measurand, such as strain induced by pressure or temperature, will induce a change in the fiber grating spacing, which changes the wavelength of the light it reflects. The value (magnitude) of the measurand is directly related to the wavelength reflected by the fiber grating and can be determined by detecting the wavelength of the reflected light.

Other optical signal analysis techniques may be used with the present invention such as the necessary hardware and software to implement the optical signal diagnostic equipment disclosed in U.S. Patent Nos. 4,996,419; 5,361,130; 5,401,956; 5,426,297; and/or 5,493,390.

As is well known in the art, there are various optical signal analysis approaches which may be utilized to analyze return signals from Bragg Gratings. These approaches may be generally classified in the following four categories:

1. Direct spectroscopy utilizing conventional dispersive elements such as line gratings, prisms, etc., and a linear array of photo detector elements or a CCD array.

2. Passive optical filtering using both optics or a fiber device with wavelength-dependent transfer function, such as a WDM coupler.

3. Tracking using a tuneable filter such as, for example, a scanning Fabry-Perot filter, an acoustooptic filter such as the filter described in the above referenced U.S. Patent No. 5,493,390, or fiber Bragg Grating based filters.

4. Interferometry utilizing well known grating-based or coupler-based scheme using fiber Bragg Grating or coupler pairs for detecting a change in phase as a function of a change in length of the optical fiber.

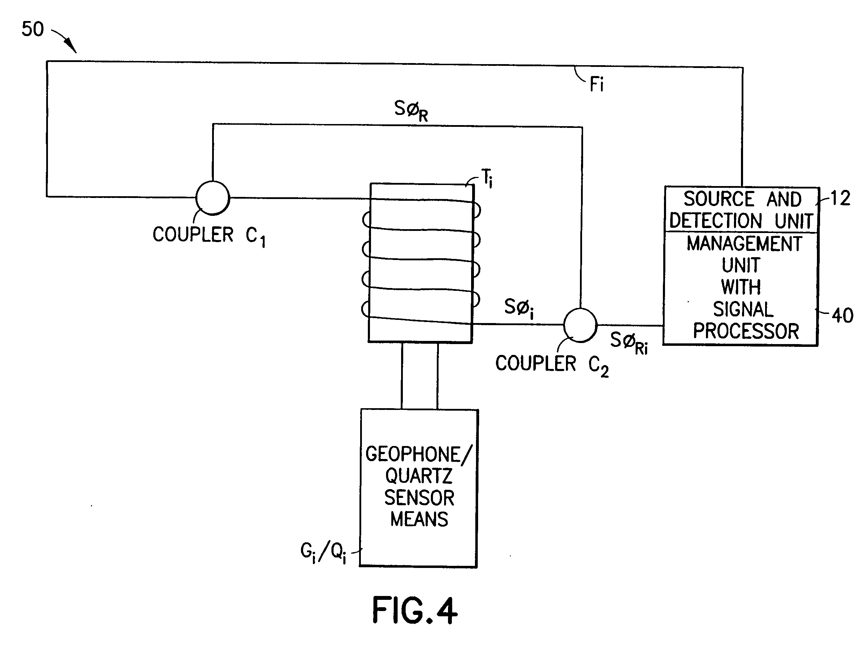

The particular technique utilized will vary, and may depend on the Bragg Grating wavelength shift magnitude (which depends on the sensor design) and the frequency range of the measurand to be detected. The reader is generally referred to Figures 4-8 of US 6,175,108, discussed above, which would be appreciated by a person skilled in the art.
Embodiments are also envisioned using time division multiplexing in which the same wavelength X, is reflected from different fiber Bragg Grating pairs spaced at different locations. The reflected optical signal is processed using known time division multiplexing signal processing techniques.

Coupler-based Interferometer Sensing System in Figure 4

Figure 4 shows a coupler-based interferometer sensing system generally indicated as 50. There are many different coupler-based interferometer systems known in the art, and the description of the embodiment shown in Figure 4 is provided by way of example only. The scope of the sensing system of the present invention is not intended to be limited to any particular kind of coupler-based interferometer system.
In Figure 4, the coupler-based interferometer sensing system 50 includes an optical source and detection unit 12, a fiber $F_i$, a coupler $C_1$, a transducer $T_i$, a geophone or quartz sensor $G_i/Q_i$, a coupler $C_2$ and a measurement unit 140. In this embodiment fiber Bragg Gratings are not used. Instead, the optical source and detection unit 12 provides an optical signal on the optical fiber $F_i$ to the coupler $C_1$, which splits the optical signal into two optical signals, one of which is labelled $S\varnothing_R$ having a reference phase $\varnothing_R$. The geophone or quartz sensor $G_i/Q_i$ responds to a pressure, for providing a geophone or quartz sensor signal containing information about the pressure. Consistent with that discussed above, the quartz sensor $Q_i$ would also respond to an electrical signal not shown. The transducer $T_i$ responds to the geophone or quartz sensor signal, for providing a transducer force containing information about the geophone or quartz sensor signal. The optical fiber $F_i$ wrapped around the transducer $T_i$ responds to the transducer force, changes the phase of the other optical signal depending on the change in length of the fiber $F_i$, for providing a transduced optical signal $S\varnothing_i$ having a transduced phase $\varnothing_i$ containing information about the transducer force. The coupler $C_2$ combines the optical signal $S\varphi_R$ having the reference phase $\varphi_R$ and the transduced optical signal $S\varphi_i$ having the transduced phase $\varphi_i$, for providing a coupled optical signal $S\varphi_{Ri}$. In operation, the optical signal $S\varphi_R$ and the transduced optical signal $S\varphi_i$ interfere with one another. The measurement unit 140 processes the coupled optical signal $S\varphi_{Ri}$ using very well known interferometer signal processing techniques, which are described in one or more of the patents mentioned herein. Figure 4 shows the coupler-based interferometer sensing system 50 having one combination of a fiber $F_i$, a coupler $C_1$, a transducer $T_i$, geophone or quartz sensor $G_i/Q_i$, a coupler $C_2$; however, other embodiments are also known in the art.

Alternative Embodiment

Figure 5 shows an alternative embodiment of the sensing system of the present invention generally indicated as 100. In the sensing system 100, the electromechanical converter includes acoustic transducers $AT_1$, $AT_2$, ..., $AT_n$ in combination with transducers $T_1'$, $T_2'$, ..., $T_n'$. The acoustic transducer $AT_1$, $AT_2$, ..., $AT_n$ respond to the quartz sensor signal, for providing acoustic transducer waves containing information about the quartz sensor signal. The transducers $T_1'$, $T_2'$, ..., $T_n'$ respond to the acoustic transducer wave, for providing mechanical transducer forces containing information about the acoustic transducer wave. The transducers $T_1'$, $T_2'$, ..., $T_n'$ are known in the art, and may include mandrel transducers as shown in Figure 5, as well as piggy backed piezoelectric or magnetostrictive transducers. The piggy backed piezoelectric or magnetostrictive transducer would include a first piezoelectric or magnetostrictive transducer and a second piezoelectric or magnetostrictive transducer having the fiber wrapped around and bonded thereto similar to that shown in Figure 2 or 3. The first piezoelectric or magnetostrictive transducer senses the acoustic wave, deforms, and provides an electromechanical signal containing information about the acoustic wave. The second piezoelectric or magnetostrictive transducer responds to the electromechanical signal from the first piezoelectric or magnetostrictive transducer, changes an optical parameter or characteristic of the optical source signal depending on the change in length of the optical fiber and provides a transduced optical signal containing information about the electromechanical force from the first piezoelectric or magnetostrictive transducer, similar to that shown and described in Figures 2 and 3.

Similar to that discussed above, each fiber Bragg Grating pair 120, 122; 124, 126; 128, 130 is arranged on a part of the optical fiber F not bonded to the transducers $T_1$, $T_2$, ..., $T_n$, and operates in a manner similar to that shown and described above with respect to Figure 2.

Issues Related to Cross Talk

A FBG sensor will pick up acoustic signals from other sensors in the system shown in Figure 5. If the sensors are far apart so that the signals from other sensors are much smaller than the desired signal, the cross talk is not a problem. The frequency of the highest-level signal read by a FBG sensor corresponds to the pressure at that location. Since the sensors are far apart, identifying which signal is the strongest, is very easy.

In a system with sensors densely distributed, all the acoustic transducers must be carefully calibrated.

The cross talk is effectively eliminated if some acoustic insulation is used around the transducers in the embodiment shown in Figure 5.

Weighted Signal Processing Technique

Weighted signal processing techniques are possible using the sensing system of the present invention. For example, the signals from the geophone or quartz sensors $G_1/Q_1$, $G_2/Q_2$, ..., $G_n/Q_n$ may be summed with the following equation:

$$S = w(G_1) * s_1 + w(G_2) * s_2 + \ldots + w(G_n) * s_n,$$

or

$$S = w(Q_1) * s_1 + w(Q_2) * s_2 + \ldots + w(Q_n) * s_n,$$

where $w(G_i)$ or $w(Q_i)$ is a weighting function for a geophone or quartz sensor $G_i/Q_i$, and $s_i$ is the electrical voltage signal from a geophone or quartz sensor $G_i/Q_i$. The weighting function can be used to determine the directivity as well as other important characteristics of a particular pressure.

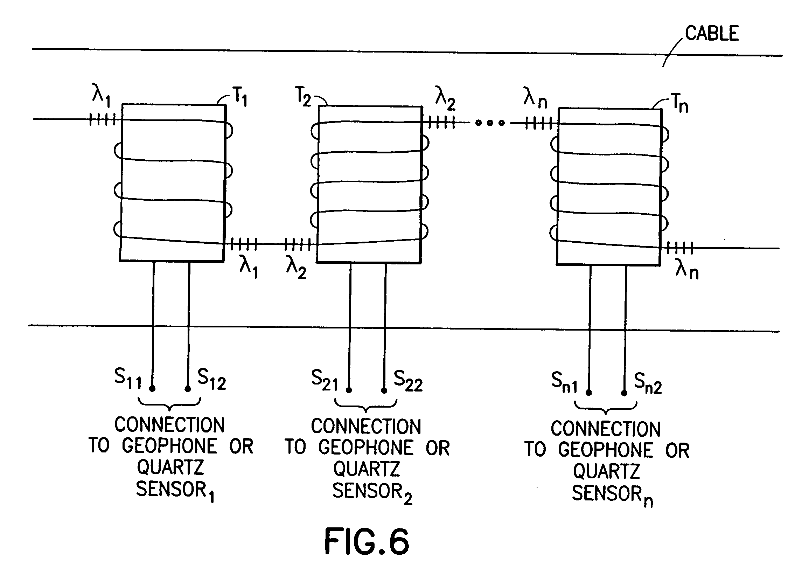

Figure 6 - A Cable Housing Arrangement

Figure 6 shows a cable for housing the quartz sensor connections, the transducers, and the optical fiber to permit a much simpler deployment of the sensing system of the present invention. The transducers $T_1$, $T_2$, ..., $T_n$ may be oriented in any particular way in the cable, and the scope of the invention is not intended to be limited to any particular orientation.

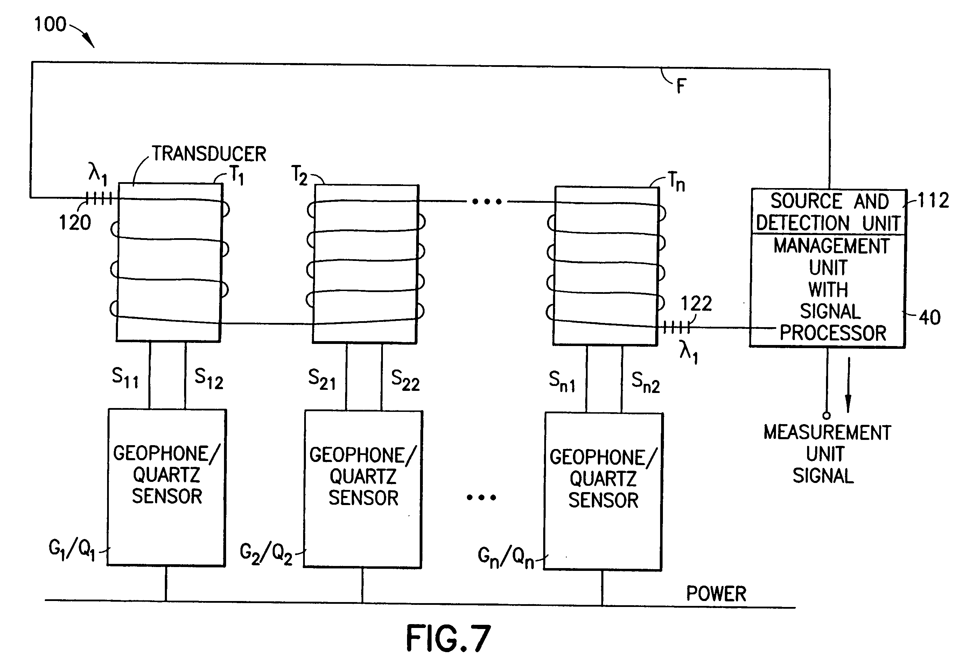

Figure 7 - Series Arrangement of Transducers

Figure 7 shows a sensing system generally indicated as 100'. The parts in Figure 7 that are similar to the parts in other Figures, including Figures 2 and 5, are similarly labelled and not described with respect to Figure 7. The sensing system 100' has a series arrangement of transducers $T_1$, $T_2$, ..., $T_n$ with one fiber Bragg Grating pair 120, 122 at each end thereof having the same wavelength $\lambda_1$. In operation, expansion and contraction of the transducers $T_1$, $T_2$, ..., $T_n$ combine to change the length of the optical fiber, which in turn changes the phase of the optical signal. Consistent with that discussed above, normally the geophone does not respond to an electrical signal while the quartz sensor would.

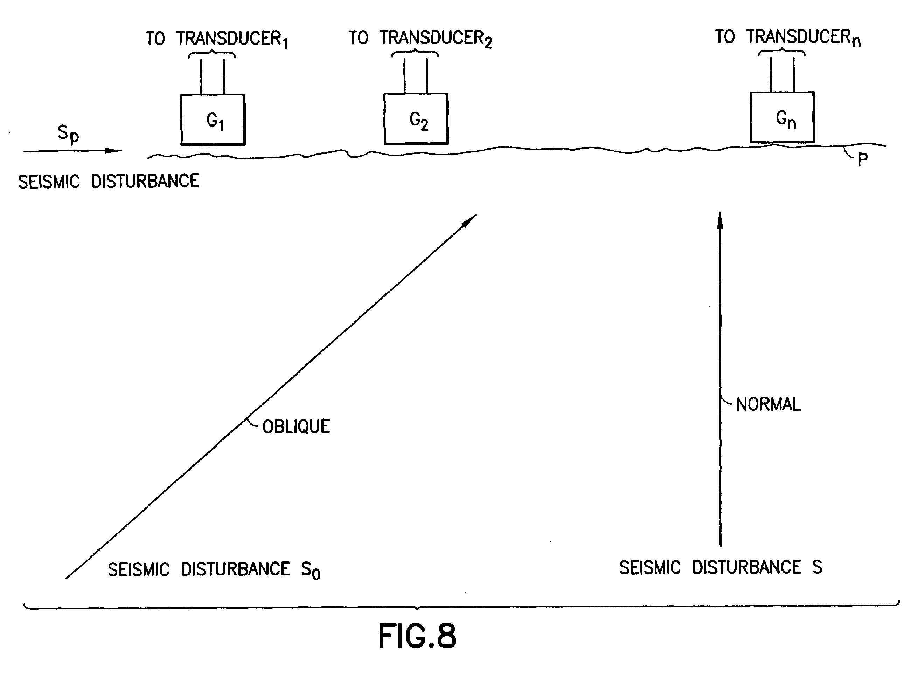

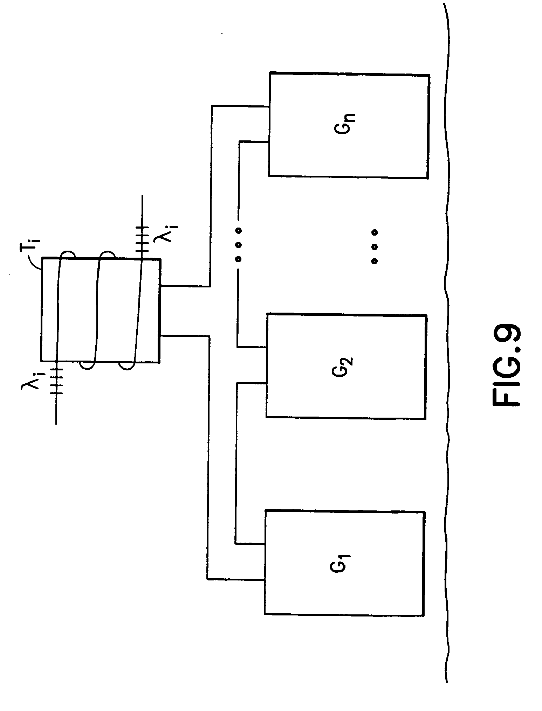

Figures 8 and 9 - Deployments of an Array of Geophones

Figure 8 shows a deployment of an array of geophones for connecting in a parallel relationship with respective transducers (not shown). The weighted signal processing techniques may include summing the signals from the geophones $G_1$, $G_2$, ..., $G_n$ on a plane P of deployment with the following equation:

$$S = w(G_1) * s_1 + w(G_2) * s_2 + \ldots + w(G_n) * s_n,$$

where $w(G_i)$ is a weighting function for a geophone $G_i$, and $s_i$ is the electrical voltage signal from a geophone $G_i$. The weighting function can be used to determine the directivity of the seismic disturbance, such as an oblique seismic disturbance So transmitted at an angle with respect to the plane P of deployment of the geophones $G_1$, $G_2$, ..., $G_n$ or an orthogonal seismic disturbance $S_N$ transmitted normal to the plane P of deployment of the geophones $G_1$, $G_2$, ..., $G_n$, or to average out the perturbations from the seismic disturbance Sp moving parallel to the plane P of deployment of the geophones $G_1$, $G_2$, ..., $G_n$.

Figure 9 shows another deployment of an array of geophones for connecting in a series relationship with a single transducer $T_i$. The series relationship of geophones $G_1$, $G_2$, ..., $G_n$ may also be used in combination with embodiments show above.

The Acoustic Logging System

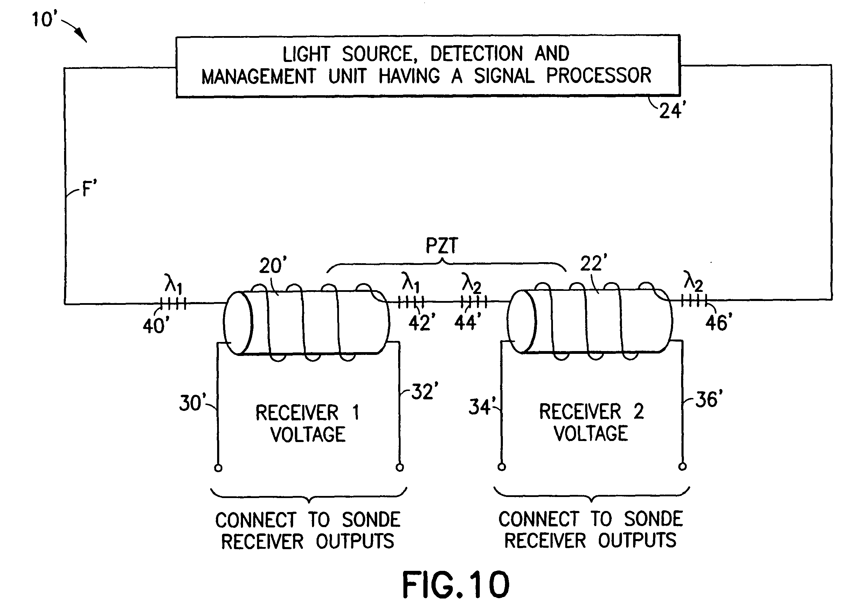

Figure 10 shows an acoustic logging system which is the subject matter of the present invention and generally indicated as 10'. The acoustic logging system features one or more transducers 20', 22', an optical fiber F', and a light source, detection and management unit 24'.

The transducers 20', 22' respond to the electrical receiver signals on lines 30', 32', 34', 36' from the receiver of the sonde shown in Figure 1, for example, for providing one or more mechanical transducer forces containing information about the electrical receiver signals. One or more of the transducer 20', 22' may be a piezoelectric or magnetostrictive transducer, which are well known in the art. The scope of the invention is not intended to be limited to any particular type or kind of transducer.

The light source, detection and management unit 24' provides an optical signal through the optical fiber F'. The optical fiber F' may be disposed in a wireline such as that shown and described in United States Patent No. 5,495,547 that connects the light source, detection and management unit 24' to the sonde (Figure 1).

The optical fiber F' responds to the one or more mechanical transducer forces, for changing an optical parameter or characteristic of the optical signal depending on the change in length of the optical fiber F', and providing a transduced optical signal containing information about the one or more mechanical transducer forces from the one or more transducers 20', 22'. The optical fiber F is wrapped around the one or more transducers 20', 22' and affixed thereon. The optical fiber F' may be affixed to the one or more transducers 20', 22' by bonding or wrapping under tension; and the scope of the invention is not intended to be limited to any particular manner of the affixing the same.

In Figure 10, the optical fiber F' is bonded to the one or more transducers 20', 22'. The optical fiber F' has fiber Bragg Grating pairs 40', 42'; 44', 46' arranged on a part thereof not bonded to the one or more transducers 20', 22'. Each transducer 20', 22' is arranged between a respective fiber Bragg Grating pair 40', 42'; 44', 46'. In this embodiment, a change in the length of the optical fiber F' causes a change in the phase of the optical signal transmitted or reflected in the optical fiber F'.

In another embodiment shown in part in Figure 3, the optical fiber F has a fiber Bragg Grating 32 arranged on a part thereof bonded to a transducer T. In this embodiment, a change in the length of the fiber Bragg Grating 32 causes a change in the wavelength of the optical signal transmitted or reflected in the optical fiber F.

The acoustic logging system 10' may also include a coupler-based interferometric system shown in Figure 5 for sensing and determining the change in the optical parameter or characteristic of the optical signal depending on the change in length of the optical fiber. This embodiment is discussed in further detail below.

In each embodiment, the change in length of the optical fiber causes a change in the phase or wavelength of the optical signal being transmitted or reflected through the optical fiber. The scope of the invention is not intended to be limited to any particular fiber Bragg Grating arrangement, or the method for sensing and detecting optical signals from the same.

The detection and management unit 24' has a signal processor, responds to the transduced optical signal, and provides a detection and management unit signal containing information about the properties of earth formations in the borehole. The detection and management unit 24' may use either a wavelength division multiplexing scheme for signal processing, a time division multiplexing scheme for signal processing or a combined wavelength and time division multiplexing scheme for signal processing.

The Basic Operation of the Present Invention

In Figure 10, the receiver signal is measured using the present invention. The pressure at the piezoelectric receiver induces a voltage that is proportional to the pressure. In a conventional sonde shown in Figure 10, this voltage is measured by the electronics within the sonde. In one embodiment of the invention, the receiver voltage is applied to a piezoelectric transducer. The diameter of the cylinder is now proportional to the voltage. The variation in cylinder diameter is monitored by the optic fiber wound around it. The stretch or contraction of the optical fiber F is measured by the interference between light beams reflected from the two fiber Bragg Gratings as shown in Figure 4. The couplers $C_1$, $C_2$ used in the traditional interferometric technology can be used in place of one or more fiber Bragg Grating pairs 40', 42'; 44', 46' shown in Figure 10.

The properties of the piezoelectric transducer and the length of optical fiber F wound around the cylinder determine the sensitivity of the interferometric method. 1 micro-volt can be measured by using 50 meters of fiber wound on a cylinder of 2 inches in diameter and the state of art opto-electronics. Increasing the length of optical fiber F wound around the transducer can increase the voltage measurement sensitivity until the detectable change in optical path length is overwhelmingly due to the thermal noise.

A fiber Bragg Grating 32 can also be used in the optical fiber wound on the transducer as shown in Figure 3. In this case, the center wavelength shift of the reflected light is a direct measure of the stretch of the optical fiber F'.

Although the cylindrical piezoelectric is very convenient to use, rectangular or other shapes of piezoelectric can also be used to convert the voltage output of the pressure transducers into strain in the fiber.

The low-impedance output of a magnetostrictive transducer can also be measured by fiber optics. The electric current output is applied to a coil around another magnetostrictive material. The optical fiber F' wound around the material is stretched or contracted according to the transducer output.

Dipole transmitters and receivers have been used in acoustic logging. A true mechanical dipole transducer has one output. Very often, multi-pole sensors are implemented using multiple monopole pressure transducers. A dipole receiver can be made of two pressure transducers. The transducer outputs are measured individually using fiber optics as described above. The difference between the two transducer measurements is that of the dipole receiver.

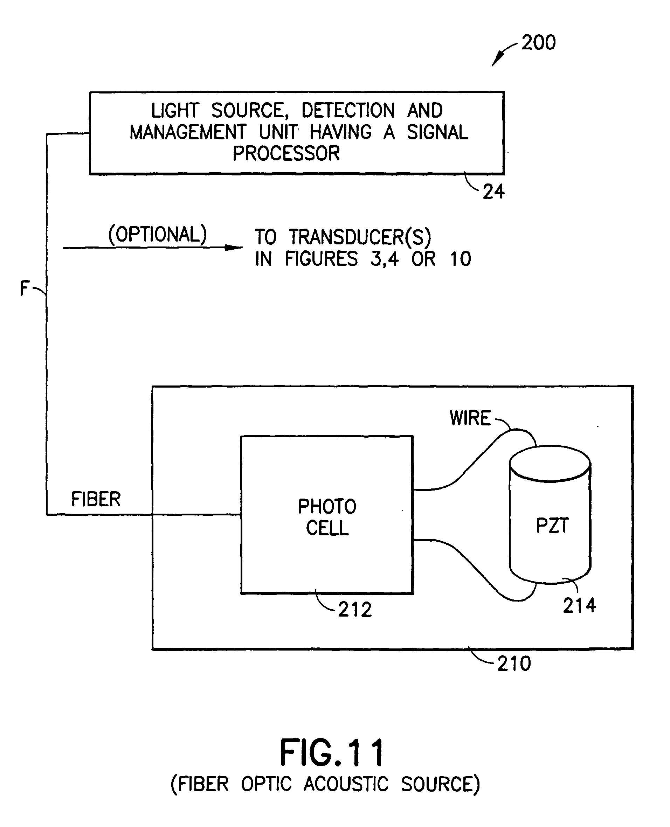

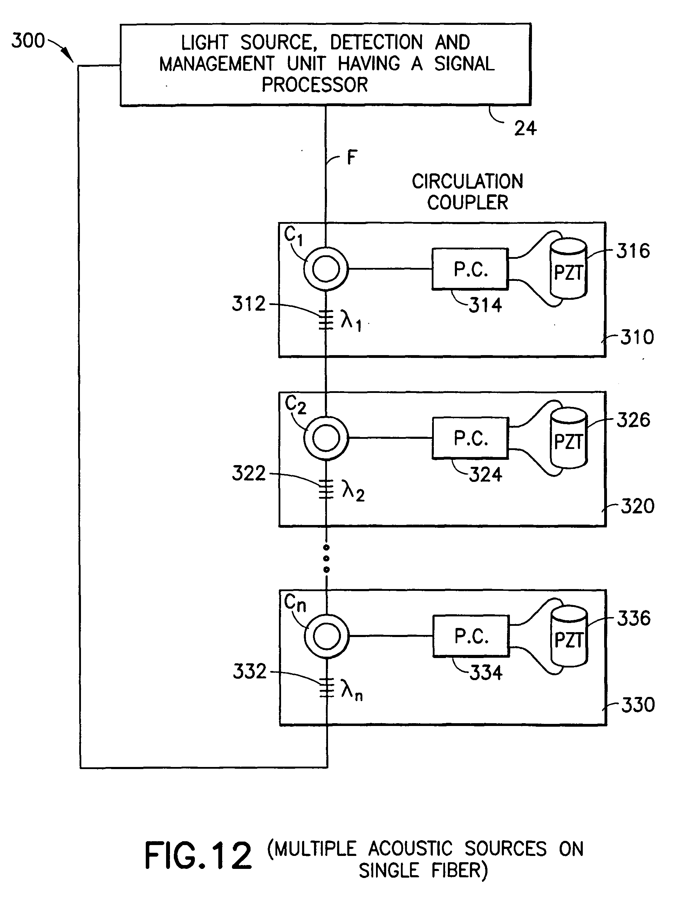

The designs described above may use the existing transmitter design in the sonde shown in Figure 1, or the new transmitter designs shown in Figures 11 and 12. When fiber optics is used to measure voltage output of the transducers, the sophisticated and temperature sensitive electronics is removed from the well. One advantage of using this design is that one can use the qualified and proven transducers and other sonde hardware. This design can be quickly implemented and accepted by the industry.

As discussed above, the light source and detection unit 24' is a complete data logging system; and the scope of the invention is not intended to be limited to any particular way for detecting, measuring and logging acoustic waves based on the data contained in the coupler optical signal Sø$_{Ri}$. Other coupler-based interferometer sensing embodiments are also known in the art.

Fiber optic Acoustic Source

Figure 11 shows a part of an embodiment generally indicated as 200 having at least one transmitter 210 of a sonde (not shown in detail) that is a fiber optic acoustic source having a photocell 212 and an acoustic transducer 214. The photocell 212 responds a fiber optic acoustic source signal from the detection and management unit 24, for providing electrical photocell signals; and the acoustic transducer 214 responds to the electrical photocell signals, for providing at least one transmitter acoustic signal. In operation, the light pulses are fed into the photocell 212. The photocell powers the transducer 214. The photocell 212 and acoustic transducer 214 are known in the art; and the scope of the invention is not intended to be limited to any particular kind or type thereof. The transducer 214 may be a piezoelectric or magnetostrictive transducer.

The embodiment 200 in Figure 11 may be used alone or in combination with one or more of the embodiments shown in Figures 3, 4 or 10. For example, in combination, the transmitter 210 would be substituted for one or more transmitters of the sonde shown in Figure 1, and used in combination with the embodiments shown in Figures 3, 4 or 10. Embodiments are envisioned in which a single optical fiber connects the detection and management unit 24 to the embodiment in Figure 1 and one of the embodiments shown in Figures 3, 4 or 10, or two single optical fiber separately connects the detection and management unit 24 to the embodiment in Figure 1 and one of the embodiments shown in Figures 3, 4 or 10.

Multiple Fiber Optic Acoustic Source

Figure 12 shows a part of an embodiment generally indicated as 300 having transmitters 310, 320, 330 that are multiple fiber optic acoustic sources having an optical fiber F with fiber Bragg Gratings 312, 322, 332 therein each with a respective wavelength $\lambda_1, \lambda_2, ..., \lambda_n$. Each multiple fiber optic acoustic source 310, 320, 330 includes a circulation coupler optical coupler $C_1, C_2, ..., C_n$, a fiber Bragg Grating 312, 322, 332, a photocell 314, 324, 334 and an acoustic transducer 316, 326, 336.

Each circulation coupler $C_1, C_2, ..., C_n$ respectively combines with a respective fiber Bragg Grating 312, 322, 332, for responding to a respective fiber optic acoustic source signal from the detection and management unit 24, for providing a respective circulation coupler fiber Bragg Grating acoustic source optical signal. Each photocell 314, 324, 334 respectively responds to the respective circulation coupler fiber Bragg Grating acoustic source optical signal, for providing respective electrical photocell signals. Each acoustic transducer 316, 326, 336 respectively responds to the respective electrical photocell signals, for providing a respective acoustic transducer signal as the transmitter acoustic signal.

Similar to that discussed above in relation to Figure 11, the embodiment 300 in Figure 12 may be used alone or in combination with one or more of the embodiments shown in Figures 3, 4 or 10.

In operation, a single strand of single-mode fiber is being used to drive multiple acoustic sources. Figure 12 shows a design using three-way circulation couplers. The circulation coupler passes the light from one input almost entirely to the next port. Strongly reflective gratings are used to selectively reflect light to power the photocell. The light reflected from a grating section is passed through the coupler to the fiber linked to the photocell. The source i is activated by light of wavelength $\lambda_1$.

In Figure 12, light energy transmitted through the single mode fiber is used to directly drive the PZT transducer. The maximum power output is about 1 Watt that is the upper limit on how much light energy can be fed into a single mode fiber. In noisy logging environment, bigger acoustic sources may be required. The design in Figure 12 could be modified.

Fiber Optic Transducers

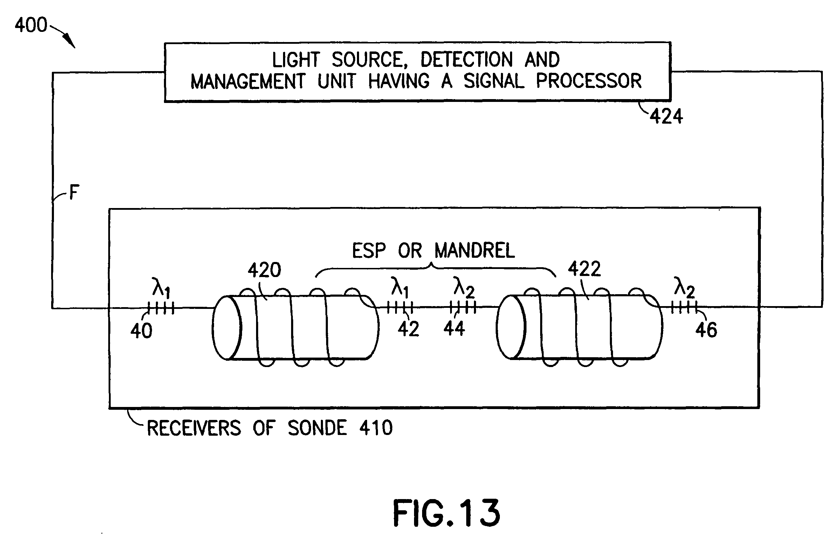

Figure 13 shows an acoustic logging system generally indicated as 400 having receivers generally indicated as 410 of a sonde (Figure 1), a light source 424, an optical fiber F, and a detection and management unit 424. The light source 424 and detection and management unit 424 are shown as one unit in Figure 13.

In this embodiment, the receivers 410 are opto-mechanical transducers 420, 422 that respond to an acoustic transmitter force such as a pressure, for providing mechanical transducer forces containing information about properties of earth formations in a borehole. The opto-mechanical transducer may be a fiber-wrapped mandrel, or other known material such as that used in an electrical submersible pump monitoring system.

The light source 424 provides an optical signal to the optical fiber F.

The optical fiber F responds to the mechanical transducer forces, for changing an optical parameter or characteristic of the optical signal depending on the change in length of the optical fiber, and providing a transduced optical signal containing information about the mechanical transducer forces. The optical fiber F is wrapped around the opto-mechanical transducers 420, 422 and bonded thereon. As shown in Figure 13, the optical fiber F have fiber Bragg Grating pairs 40, 42; 44, 46 similar to that shown in Figure 2 arranged on a part thereof not bonded to the opto-mechanical transducers 420, 422 and arranged between a respective fiber Bragg Grating pair. The optical fiber F may also have a fiber Bragg Grating arranged on a part thereof and bonded to an opto-mechanical transducer 420, 422 similar to that shown in Figure 3.

The detection and management unit 424 has a signal processor, responds to the transduced optical signal, for providing a detection and management unit signal containing information about the properties of earth formations in the borehole.

In this embodiment, the sonde (Figure 1) also has a transmitter (Figure 1) for providing the acoustic transmitter force.

In the above design, the acoustic pressure signal is converted into a mechanical strain in the cylinder. The mechanical strain is translated into an optical signal.

Fiber optic pressure transducers can be used in an acoustic tool to sense the acoustic pressure signal directly. A pressure transducer used in the ESP monitoring systems or mandrel hydrophone are examples of transducers that can be used in acoustic tools. Fiber Bragg Gratings without extra amplifying mechanisms can also be used. An acoustic tool (i.e. sonde) built using fiber optic transducers are simpler and potentially more reliable.

Method for Acoustic Recording of Information about an Object

The present invention also features a method for acoustic recording of information about an object.

The method includes the steps of: (1) moving a receiver that responds to acoustic waves from a transmitter for sensing information about an object; (2) providing from the receiver electrical receiver signals containing information about the acoustic waves; (3) responding with a transducer to the electrical receiver signals from the receiver, for providing a mechanical transducer force containing information about the electrical receiver signals; (4) providing an optical signal from an light source; (5) responding with an optical fiber to the mechanical transducer force, for changing an optical parameter or characteristic of the optical signal depending on the change in length of the optical fiber, and providing a transduced optical signal containing information about the mechanical transducer force from the transducer; and (6) detecting and managing with a detection and management unit having a signal processor that responds to the transduced optical signal, for providing a signal processor signal containing information about the acoustic recording of the object.

Scope of the Invention

Although the invention has been described and illustrated with respect to exemplary embodiments thereof, the foregoing and various other additions and omissions may be made therein and thereto without departing from the scope of the present invention as defined by the appended claims.

**Claims**

1. An acoustic logging system having a sonde for arranging in a borehole of a well such as an oil well, the sonde having at least one transmitter for providing at least one transmitter acoustic signal, the acoustic logging system comprising:

    one or more receivers arranged in the sonde, each comprising a transducer (20', 22'; 420, 422) responsive to the at least one transmitter acoustic signal, for providing one or more mechanical transducer forces containing information about properties of earth formations in a borehole;
    a light source (24'; 424) for providing an optical signal;
    an optical fiber (F'; F), responsive to the one or more mechanical transducer forces, for changing an optical parameter or characteristic of the optical signal depending on the change in length of the optical fiber (F'; F) in the sonde, and providing a transduced optical signal containing information about the one or more mechanical transducer forces; and
    a detection and management unit having a signal processor (24'; 424), responsive to the transduced optical signal, for providing a detection and management unit signal containing information about the properties of earth formations in the borehole.

2. An acoustic logging system according to claim 1, wherein the one or more transducers are responsive to electrical receiver signals provided responsive to the at least one transmitter acoustic signal.

3. An acoustic logging system according to claim 2, wherein at least one transducer is a piezoelectric or magnetostrictive transducer.

4. An acoustic logging system according to claim 1, wherein at least one transducer is a mandrel.

5. An acoustic logging system according to claim 1 or 2,
    wherein the optical fiber is wrapped around the one or more transducers and affixed thereon.

6. An acoustic logging system according to claim 1 or 2,
    wherein the optical fiber is bonded to the one or more transducers and affixed thereon;
    wherein the optical fiber has fiber Bragg Grating pairs arranged on a part thereof not bonded to the one or more transducers; and
    wherein each transducer is arranged between a respective fiber Bragg Grating pair.

7. An acoustic logging system according to claim 1 or 2,
    wherein the optical fiber has a fiber Bragg Grating arranged on a part thereof and bonded to a transducer.

8. An acoustic logging system according to claim 1 or 2, wherein the acoustic logging system further comprises a coupler-based interferometric system for sensing and determining the change in the optical parameter or characteristic of the optical signal depending on the change in length of the optical fiber.

9. An acoustic logging system according to claim 1 or 2,
    wherein the change in length of the optical fiber causes a change in the phase or wavelength of the optical signal being transmitted or reflected through the optical fiber.

10. An acoustic logging system according to claim 1 or 2,
wherein the detection and management unit uses a wavelength division multiplexing scheme for signal processing.

11. An acoustic logging system according to claim 1 or 2,
wherein the detection and management unit uses a time division multiplexing scheme for signal processing.

12. An acoustic logging system according to claim 1 or 2, wherein the detection and management unit uses a combination of a wavelength division multiplexing and time division multiplexing scheme for signal processing.

13. An acoustic logging system according to claim 1 or 2, wherein the at least one transmitter of the sonde is a fiber optic acoustic source having a photocell and an acoustic transducer.

14. An acoustic logging system according to claim 1 or 2,
wherein the photocell responds to a fiber optic acoustic source signal from the detection and management unit, for providing electrical photocell signals; and
wherein the acoustic transducer responds to the electrical photocell signals, for providing the at least one transmitter acoustic signal.

15. An acoustic logging system according to claim 1 or 2,
wherein the at least one transmitter includes multiple fiber optic acoustic sources; and
wherein the optical fiber has fiber Bragg Gratings therein each with a respective wavelength.

16. An acoustic logging system according to claim 1 or 2, wherein each multiple fiber optic acoustic source includes a respective fiber optic acoustic source having a respective optical coupler, a respective fiber Bragg Grating, a respective photocell and a respective acoustic transducer.

17. An acoustic logging system according to claim 1 or 2,
wherein the respective optical coupler is a circulation coupler that combines with the respective fiber Bragg Grating for responding to a respective fiber optic acoustic source signal, for providing a respective circulation coupler fiber Bragg Grating acoustic source optical signal;
wherein the respective photocell responds to the respective circulation coupler fiber Bragg Grating acoustic source optical signal, for providing respective electrical photocell signals; and
wherein the respective acoustic transducer responds to the respective electrical photocell signals, for providing a respective acoustic transducer signal as the transmitter acoustic signal.

**Patentansprüche**

1. Akustisches Vermessungssystem mit einer Sonde zum Anordnen in einem Bohrloch einer Quelle, wie etwa einer Ölquelle, wobei die Sonde zumindest einen Geber zum Bereitstellen zumindest eines Geber-Schallsignals hat, wobei das akustische Vermessungssystem umfaßt:

einen oder mehrere Empfänger, die in der Sonde angeordnet sind, wobei jeder einen Wandler (20', 22'; 420, 422) umfaßt, der auf das zumindest eine Geber-Schallsignal anspricht, zum Bereitstellen einer oder mehrerer mechanischer Wandlerkräfte, die Information über Eigenschaften von Erdformationen in einem Bohrloch enthalten;
eine Lichtquelle (24'; 424) zum Bereitstellen eines optischen Signals;
eine optische Faser (F'; F), die auf eine oder mehrere mechanische Wandlerkräfte anspricht, zum Ändern eines optischen Parameters oder Kennwerts des optischen Signals in Abhängigkeit von der Änderung der Länge der optischen Faser (F'; F) in der Sonde und zum Bereitstellen eines gewandelten optischen Signals, das Information über die eine oder die mehreren mechanischen Wandlerkräfte enthält; und
einer Detektions- und Verwaltungseinheit mit einem Signalprozessor (24; 424), der auf das gewandelte optische Signal anspricht, zum Bereitstellen eines Detektions- und Verwaltungseinheitssignals, das Information über die Eigenschaften von Erdformationen im Bohrloch enthält.

2. Akustisches Vermessungssystem nach Anspruch 1, wobei der eine oder die mehreren Wandler auf elektrische Empfängersignale ansprechen, die ansprechend auf das zumindest eine Geber-Schallsignal bereitgestellt werden.

3. Akustisches Vermessungssystem nach Anspruch 2, wobei zumindest ein Wandler ein piezoelektrischer oder magnetostriktiver Wandler ist.

4. Akustisches Vermessungssystem nach Anspruch 1, wobei zumindest ein Wandler ein Wickelkern ist.

5. Akustisches Vermessungssystem nach Anspruch 1 oder 2,
wobei die optische Faser um einen oder mehrere Wandler gewickelt und daran befestigt ist.

6. Akustisches Vermessungssystem nach Anspruch 1 oder 2,
wobei die optische Faser mit dem einen oder den mehreren Wandlern verbunden und an diesem bzw. diesen befestigt ist;
wobei die optische Faser Faser-Bragg-Gitter-Paare hat, die an einem Teil davon angeordnet sind, die nicht mit dem einen oder den mehreren Wandlern verbunden sind; und
wobei jeder Wandler zwischen einem jeweiligen Faser-Bragg-Gitter-Paar angeordnet ist.

7. Akustisches Vermessungssystem nach Anspruch 1 oder 2,
wobei die optische Faser ein Faser-Bragg-Gitter hat, das an einem Teil davon angeordnet und mit einem Wandler verbunden ist.

8. Akustisches Vermessungssystem nach Anspruch 1 oder 2,
wobei das akustische Vermessungssystem ferner ein kopplergestütztes interferometrisches System zum Erfassen und Bestimmen der Änderung des optischen Parameters oder Kennwerts des optischen Signals in Abhängigkeit von der Änderung der Länge der optischen Faser umfaßt.

9. Akustisches Vermessungssystem nach Anspruch 1 oder 2,
wobei die Änderung der Länge der optischen Faser eine Änderung der Phase oder Wellenlänge des optischen Signals bewirkt, das durch die optische Faser übertragen oder reflektiert wird.

10. Akustisches Vermessungssystem nach Anspruch 1 oder 2,
wobei die Detektions- oder Verwaltungseinheit ein Wellenlängenteilungs-multiplexierschema zur Signalverarbeitung verwendet.

11. Akustisches Vermessungssystem nach Anspruch 1 oder 2,
wobei die Detektions- oder Verwaltungseinheit ein Zeitteilungs-multiplexierschema zur Signalverarbeitung verwendet.

12. Akustisches Vermessungssystem nach Anspruch 1 oder 2,
wobei die Detektions- und Verwaltungseinheit eine Kombination aus einem Wellenlängenteilungsmultiplexier- und Zeitteilungs-multiplexierschema zur Signalverarbeitung verwendet.

13. Akustisches Vermessungssystem nach Anspruch 1 oder 2,
wobei zumindest ein Geber der Sonde eine faseroptische Schallquelle mit einer Fotozelle und einem Schallwandler ist.

14. Akustisches Vermessungssystem nach Anspruch 1 oder 2,
wobei die Fotozelle auf ein faseroptisches Schallquellensignal von der Detektions- und Verwaltungseinheit antwortet, um elektrische Fotozellensignale bereitzustellen; und
wobei der Schallwandler auf die elektrischen Fotozellensignale antwortet, um das zumindest eine Geber-Schallsignal bereitzustellen.

15. Akustisches Vermessungssystem nach Anspruch 1 oder 2,
wobei der zumindest eine Geber mehrfaseroptische Schallquellen aufweist; und
wobei in der optischen Faser Faser-Bragg-Gitter jeweils mit einer jeweiligen Wellenlänge vorhanden sind.

16. Akustisches Vermessungssystem nach Anspruch 1 oder 2,
wobei jede mehrfaseroptische Schallquelle eine jeweilige faseroptische Schallquelle mit einem jeweiligen Akustikkoppler, einem jeweiligen Faser-Bragg-Gitter, einer jeweiligen Fotozelle und einem jeweiligen Schallwandler aufweist.

**17.** Akustisches Vermessungssystem nach Anspruch 1 oder 2,
wobei der jeweilige Optikkoppler ein Zirkulationskoppler ist, der mit dem jeweiligen Faser-Bragg-Gitter zusammenwirkt, um auf ein jeweiliges faseroptisches Schallquellensignal zu antworten, um ein jeweiliges optisches Zirkulationskoppler-Faser-Bragg-Gitter-Schallquellensignal bereitzustellen;
wobei die jeweilige Fotozelle auf das jeweilige optische Zirkulationskoppler-Faser-Bragg-Gitter-Schallquellensignal antwortet, um jeweilige elektrischer Fotozellensignale bereitzustellen; und
wobei der jeweilige Schallwandler auf die jeweiligen Fotozellensignale antwortet, um ein jeweiliges Schallwandlersignal als das Geber-Schallsignal bereitzustellen.

**Revendications**

**1.** Système de diagraphie acoustique ayant une sonde destinée à être placée dans le forage d'un puits, tel qu'un puits de pétrole, la sonde ayant au moins un émetteur pour délivrer au moins un signal acoustique d'émetteur, le système de diagraphie acoustique comprenant:

un ou plusieurs récepteurs disposés dans la sonde, chacun comprenant un transducteur (20', 22'; 420, 422) sensible audit au moins un signal acoustique d'émetteur, pour délivrer une ou plusieurs forces de transducteur mécanique contenant des informations concernant les propriétés des formations terrestres dans un forage;
une source de lumière (24'; 424) pour délivrer un signal optique;
une fibre optique (F'; F) sensible auxdites une ou plusieurs forces de transducteur mécanique pour changer un paramètre optique ou une caractéristique du signal optique en fonction du changement de longueur de la fibre optique (F'; F) dans la sonde, et délivrer un signal optique capté contenant des informations concernant lesdites une ou plusieurs forces de transducteur mécanique; et
une unité de détection et de gestion ayant un processeur de signal (24'; 424), sensible au signal optique capté, pour délivrer un signal d'unité de détection et de gestion contenant des informations concernant les propriétés des informations terrestres dans le forage.

**2.** Système de diagraphie acoustique selon la revendication 1, dans lequel lesdits un ou plusieurs transducteurs sont sensibles à des signaux de récepteur électrique délivrés en réponse audit au moins un signal acoustique d'émetteur.

**3.** Système de diagraphie acoustique selon la revendication 2, dans lequel au moins un transducteur est un transducteur piézoélectrique ou à magnétostriction.

**4.** Système de diagraphie acoustique selon la revendication 1, dans lequel au moins un transducteur est un mandrin.

**5.** Système de diagraphie acoustique selon la revendication 1 ou la revendication 2, dans lequel la fibre optique est enroulée autour desdits un ou plusieurs transducteurs et y est fixée.

**6.** Système de diagraphie acoustique selon la revendication 1 ou la revendication 2,
dans lequel la fibre optique est colée auxdits un ou plusieurs transducteurs et y est fixée;
dans lequel la fibre optique a des paires de réseaux de Bragg de fibre disposées sur une partie de celle-ci non liée auxdits un ou plusieurs transducteurs; et
dans lequel chaque transducteur est disposé entre une paire de réseaux de Bragg de fibre respective.

**7.** Système de diagraphie acoustique selon la revendication 1 ou la revendication 2,
dans lequel la fibre optique a un réseau de Bragg de fibre disposé sur une partie de celle-ci et liée à un transducteur.

**8.** Système de diagraphie acoustique selon la revendication 1 ou la revendication 2,
dans lequel le système de diagraphie acoustique comprend en outre un système interférométrique basé sur un coupleur pour capter et déterminer le changement dans le paramètre optique ou la caractéristique du signal optique en fonction du changement de longueur de la fibre optique.

**9.** Système de diagraphie acoustique selon la revendication 1 ou la revendication 2,
dans lequel le changement de la longueur de la fibre optique provoque un changement de phase ou de longueur d'onde du signal optique étant transmis ou réfléchi à travers la fibre optique.

**10.** Système de diagraphie acoustique selon la revendication 1 ou la revendication 2,

dans lequel l'unité de détection et de gestion utilise un schéma de multiplexage par division en longueur d'onde pour le traitement du signal.

11. Système de diagraphie acoustique selon la revendication 1 ou la revendication 2, dans lequel l'unité de détection et de gestion utilise un schéma de multiplexage par division dans le temps pour le traitement du signal.

12. Système de diagraphie acoustique selon la revendication 1 ou la revendication 2, dans lequel l'unité de détection et de gestion utilise une combinaison d'un schéma de multiplexage par division en longueur d'onde et d'un schéma de multiplexage par division dans le temps pour le traitement du signal.

13. Système de diagraphie acoustique selon la revendication 1 ou la revendication 2, dans lequel le au moins un émetteur de la sonde est une source acoustique à fibre optique ayant une cellule photoélectrique et un transducteur acoustique.

14. Système de diagraphie acoustique selon la revendication 1 ou la revendication 2, dans lequel la cellule photoélectrique répond à un signal de source acoustique à fibre optique provenant de l'unité de détection et de gestion pour délivrer des signaux électriques de cellule photoélectrique; et dans lequel le transducteur acoustique répond aux signaux électriques de cellule photoélectrique pour délivrer ledit au moins un signal acoustique d'émetteur.

15. Système de diagraphie acoustique selon la revendication 1 ou la revendication 2, dans lequel ledit au moins un émetteur comprend de multiples sources acoustiques à fibre optique; et dans lequel la fibre optique comporte sur elle des réseaux de Bragg de fibre, ayant chacun une longueur d'onde respective.

16. Système de diagraphie acoustique selon la revendication 1 ou la revendication 2, dans lequel chacune des multiples sources acoustiques à fibre optique comprend une source acoustique à fibre optique respective ayant un coupleur optique respectif, un réseau de Bragg de fibre respectif, une cellule photoélectrique respective et un transducteur acoustique respectif.

17. Système de diagraphie acoustique selon la revendication 1 ou la revendication 2, dans lequel le coupleur optique respectif est un coupleur de circulation qui se combine avec le réseau de Bragg de fibre respectif pour répondre à un signal de source acoustique à fibre optique respectif, pour délivrer un signal optique de source acoustique à réseau de Bragg de fibre de coupleur de circulation respectif; dans lequel la cellule photoélectrique respective répond au signal optique de source acoustique à réseau de Bragg de fibre de coupleur de circulation respectif, pour délivrer des signaux électriques de cellule photoélectrique respectifs; et dans lequel le transducteur acoustique respectif répond aux signaux électriques de cellule photoélectrique respectifs, pour délivrer un signal de transducteur acoustique respectif en tant que signal acoustique d'émetteur.

SOURCE
(TRANSMITTER) —

— BOREHOLE

RECEIVERS

# FIG.1 (PRIOR ART)

F

32

TRANSDUCER

# FIG.3

FIG.2

EP 1 110 065 B1

FIG.4

EP 1 110 065 B1

FIG.5

EP 1 110 065 B1

FIG.6

FIG.7

TO TRANSDUCER$_1$     TO TRANSDUCER$_2$                    TO TRANSDUCER$_n$

$S_p$

SEISMIC DISTURBANCE

OBLIQUE

NORMAL

SEISMIC DISTURBANCE $S_0$                    SEISMIC DISTURBANCE S

FIG.8

EP 1 110 065 B1

EP 1 110 065 B1

**FIG.9**

FIG.10

```
                                                          200

        ┌─────────────────────────────────────────┐
        │     LIGHT  SOURCE,  DETECTION  AND        │
        │  MANAGEMENT  UNIT  HAVING  A  SIGNAL       │
        │              PROCESSOR                     │
        └─────────────────────────────────────────┘
                                              24

            (OPTIONAL)        TO TRANSDUCER(S)
                              IN  FIGURES  3,4  OR  10

    F
```

FIBER

PHOTO CELL

WIRE

PZT

212

214

210

# FIG.11

(FIBER OPTIC ACOUSTIC SOURCE)

FIG.12 (MULTIPLE ACOUSTIC SOURCES ON SINGLE FIBER)

400

LIGHT SOURCE, DETECTION AND
MANAGEMENT UNIT HAVING A SIGNAL PROCESSOR

424

F

ESP OR MANDREL

420          $\lambda_1$      $\lambda_2$      422

$\lambda_1$                                              $\lambda_2$

40                              42    44                              46

RECEIVERS OF SONDE 410

FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6305227 B
- US 6252656 B
- US 6137621 A
- US 5986749 A
- US 5623455 A
- US 5675674 A
- US 4162400 A
- US 5495547 A
- US 4390974 A
- US 4829486 A
- EP 0434030 A

- US 5497233 A
- US 5973317 A
- US 5945665 A
- US 5925879 A
- US 6175108 B
- US 4996419 A
- US 5361130 A
- US 5401956 A
- US 5426297 A
- US 5493390 A

**Non-patent literature cited in the description**

- **DARWIN V. ELLIS.** Well Logging For Earth Scientists. Elsevier, 1987

- **FREDERICK L. PAILLET ; CHUEN HON CHENG.** Acoustic Waves in Boreholes. CRC Press, 1991